# EUROPEAN PATENT SPECIFICATION

(11) **EP 2 642 138 B1**
(45) Date of publication and mention of the grant of the patent: **06.12.2017**
(21) Application number: 12160846.7
(22) Date of filing: 22.03.2012
(51) Int. Cl.: F16B 25/10, F16B 25/00

(54) **A screw capable of rapidly drilling and cutting**
Schraube mit Funktion zum schnellen Bohren und Schneiden
Vis capable de percer et découper rapidement

(43) Date of publication of application: 25.09.2013
(73) Proprietor: Taiwan Shan Yin International Co., Ltd., Kaohsiung City 806 (TW)
(72) Inventor: Su, Kou-Tsair, 806 Kaohsiung City (TW); Su, Yu-Jung, 806 Kaohsiung City (TW)
(74) Representative: Chaillot, Geneviève

(56) References cited:
- EP-A1- 2 444 678
- DE-A1-102006 026 176
- DE-U1- 29 706 749
- US-A1- 2009 169 334

## Description

### BACKGROUND OF THE INVENTION

### 1. Field of the Invention

The present invention relates to a fastener design, particularly to a screw capable of rapidly drilling and cutting.

### 2. Description of the Related Art

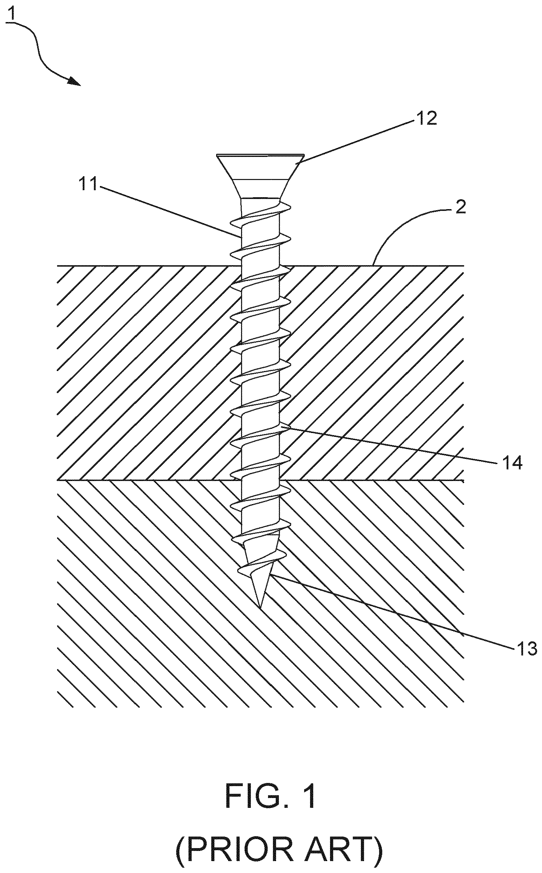

Referring to Fig. **1****,** a conventional screw **1** comprises a shank portion **11,** a head portion **12** disposed at one end of the shank portion **11,** a drilling portion **13** disposed at the other end of the shank portion **11,** and a plurality of threaded units **14** spirally disposed around the shank portion **11.** Wherein, the drilling portion **13** is formed into a tapered end. Thus, the screw **1** directly enters an object **2** via the tapered drilling portion **13,** and the following threaded units **14** continue entering the object **2** so as to achieve a fastening effect.

Afore screw **1** might be smoothly fastened into the object **2** (such as plywood) by means of the drilling portion **13** piercing the object **2.** However, in practice, the object **2** is forcedly pierced by the tapered drilling portion **13.** Thus, it is difficult to completely sever fibers contained in the object **2.** That is to say, the fibers are just simply pushed and thrust by the tapered drilling portion **13,** so the screw **1** would be easily impeded by debris resulted from the object **2** in time of drilling. As a result, the debris can not be timely expelled, and the heaped debris incurs an increasing resistance on the screw **1.** Thereby, the operation of fastening the screw **1** is influenced and the object **2** may be easily broken.

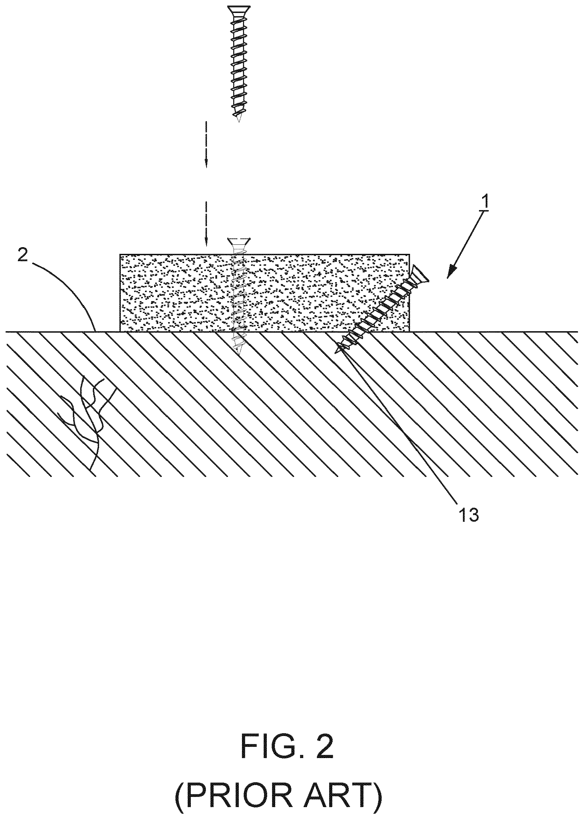

Referring to Fig. **2****,** the upright screw **1** in the object **2** might be subject to rustiness since water might pile on the head portion **12.** Therefore, in the practical application, the screw **1** is disposed tilting in the obj ect **2**. Herein, if the cutting debris can not be timely expelled, the head portion **12** easily bulges out of the object **2** after screwing. Such abnormal operation is unbeneficial for further fastening. Therefore, the screw **1** needs improvements.

European patent application EP 2 444 678 A1, which is considered as a prior-art document falling within the terms of Art. 54(3) EPC, discloses a screw including two inclined cutting planes formed on a drilling portion of the screw.

German patent n°DE 10 2006 026176 A1 D1 describes a screw for hard wood, comprising a screw tip with two cutting edges that extend approximately parallel to each other and perpendicular to the longitudinal axis of the screw. A centering tip slightly protrudes from the two cutting edges to prevent the screw from deviating to the side at the beginning of the drilling process.

German patent n°DE 297 06 749 U1 describes a screw having a threaded rod and a drilling tip. The tip comprises at least two drilling steps of different diameter which are arranged axially one behind the other. Two cutting edges are formed on the drilling steps and defined by cutting angles, respectively. The cutting angle of the first drilling step can be smaller than the cutting angle of the second drilling step.

US patent n°US 2009/169334 A1 describes a bimate screw provided with two threaded sections alternating with each other. A thread-free portion divides the threaded sections. Each thread is interrupted by slots and multiple concavities are radially disposed around a circumference of each thread.

### SUMMARY OF THE INVENTION

It is therefore the purpose of this invention to provide a screw that is capable of rapidly drilling and cutting so as to promote the screwing speed and the debris-guiding effect but decrease the screwing torque, thereby beneficial for succeeding operation.

The screw capable of rapidly drilling and cutting in accordance with the present invention, as defined by features of claim 1, comprises a shank, a head disposed at one end of the shank, a drilling portion disposed at the other end of the shank, and a plurality of threaded units spirally disposed around the shank. Two inclined cutting planes are formed on the drilling portion and the two inclined cutting planes are connected at a cutting edge. Characterized in that, a tapered positioning member extends outward from a convergence of the cutting planes for dividing the cutting edge into dual sub cutting edges. Each sub cutting edge is disposed by an inclined angle. A first included angle formed by the sub cutting edges is less than 180 degrees. The first included angle of the sub cutting edges is different from a second included angle of a taper of the tapered positioning member.

Preferably, a blank area defined on the shank divides the threaded units into a first section and a second section; a first diameter of the blank area is larger than a second diameter of the shank but smaller than a third diameter of the threaded units.

Preferably, the second included angle of a taper of the tapered positioning member is smaller than the first included angle of the sub cutting edges. The threaded units on the shank are spread to the sub cutting edges for connecting to one end of the sub cutting edges.

Preferably, a third section is defined on the shank and includes a plurality of auxiliary threaded units; the auxiliary threaded units are disposed between the threaded units; a fourth diameter of the auxiliary threaded units is smaller than a third diameter of the threaded units.

Preferably, a plurality of indented threads are formed on the auxiliary threaded units; a plurality of second guiding channels are partially defined on a part of the threaded units.

Preferably, the positioning member is formed by a plurality of inclined walls for structuring a pyramid.

Preferably, the positioning member is structured into a cone.

Accordingly, the positioning member helps the screw stably stand on a screwing object, which allows the sub cutting edges to provide a succeeding scraping effect in time of drilling. Further, the cutting planes guide cutting debris to smoothly enter the channels between the threaded units so as to rapidly expel the cutting debris therefrom. Thereby, the cutting debris does not pile into the vacancy of the threaded units, so that the screwing torque could be decreased but the screwing speed could be enhanced. Moreover, the screw is favorably embedded in a screwing object without any protrudent part. Therefore, such even screwing object is beneficial to be further fastened.

### BRIEF DESCRIPTION OF THE DRAWINGS

Fig. **1** is a schematic view showing a conventional screw;
Fig. **2** is a schematic view showing the conventional screw in screwing;
Fig. **3** is a schematic view showing a first preferred embodiment of the present invention;
Fig. **4** is an end view of Fig. **3****;**
Fig. **5** is a partial view of the first preferred embodiment of the present invention;
Fig. **6** is a schematic view showing the first preferred embodiment of the present invention in screwing;
Fig. **7** is a schematic view showing a second preferred embodiment of the present invention;
Fig. **8** is a perspective view showing a third preferred embodiment of the present invention;
Fig. **9** is a schematic view showing a fourth preferred embodiment of the present invention; and
Fig. **10** is a schematic view showing a fifth preferred embodiment of the present invention.

### DETAILED DESCRIPTION OF THE PREFERRED EMBODIMENTS

Wherever possible, the same reference numbers are used in the drawings and the description to refer to the same or like parts.

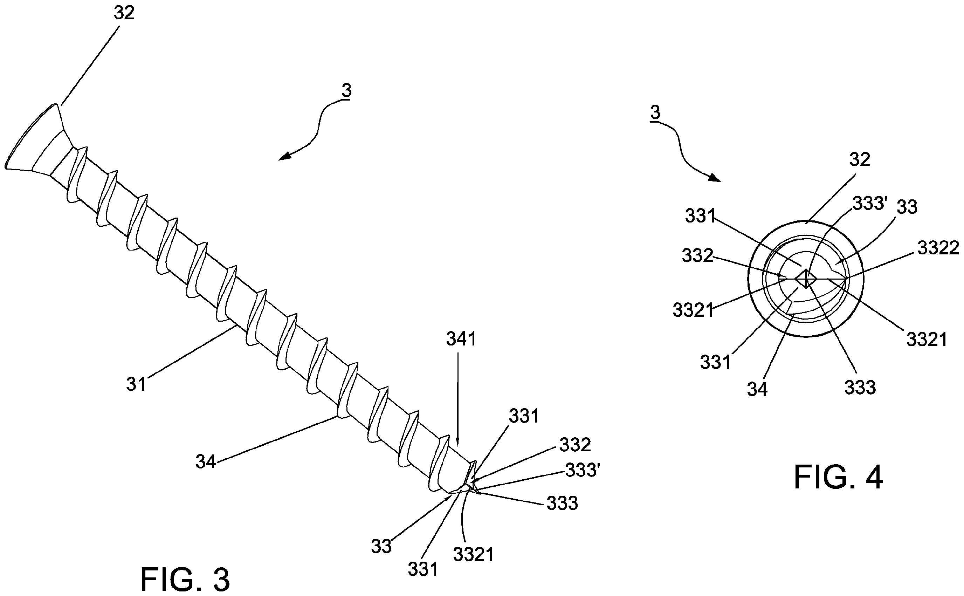

Referring to Figs. **3** and **4****,** a first preferred embodiment of the present invention is shown. In order to clearly show the features of the screw **3,** the screw **3** in this figure and in the following embodiments is presented by one side. A screw **3** comprises a shank **31,** a head **32** disposed at one end of the shank **31,** a drilling portion **33** disposed at the other end of the shank **31,** and a plurality of threaded units **34** surroundingly disposed around the shank **31.** Wherein, a first guiding channel **341** is defined amid the threaded units **34.**

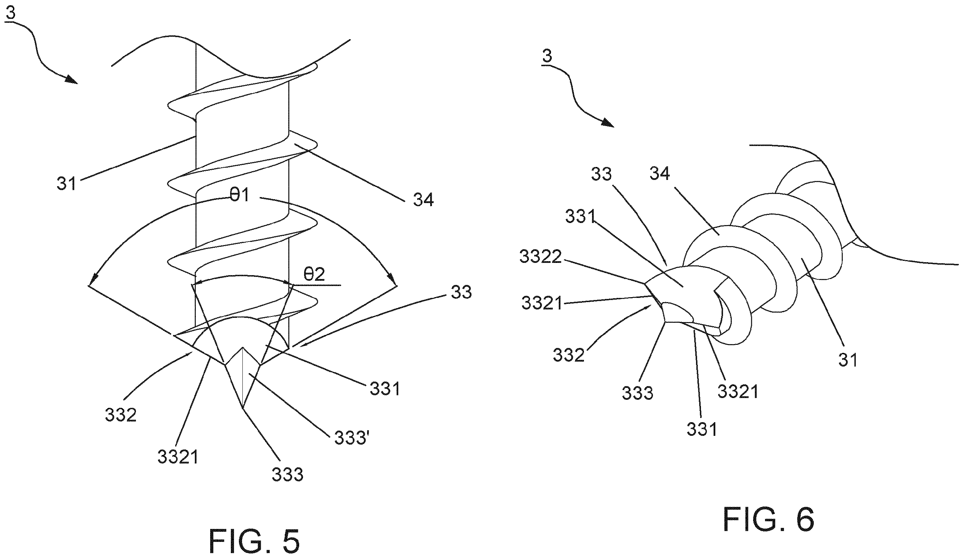

Further, two inclined cutting planes **331** are convergently formed on the drilling portion **33,** and a cutting edge **332** is formed on the connective cutting planes **331.** Additionally, a tapered positioning member **333** is integrally bulged outwards from the convergence of the cutting planes **331** to structure a tapered unit for dividing the cutting edge **332** into dual sub cutting edges **3321.** Each sub cutting edge **3321** is disposed by an inclined angle. A first included angle ***θ*1** formed by the sub cutting edges **3321** is less than 180 degrees. The first included angle ***θ*1** of the sub cutting edges **3321** is different from a second included angle ***θ*2** of a taper of the tapered positioning member **333.** Especially, the second included angle ***θ*2** of the taper of the tapered positioning member **333** is smaller than the first included angle ***θ*1** of the sub cutting edges **3321** (as shown in Fig. **5**). Moreover, the positioning member **333** is assembled by a plurality of inclined walls **333'** bulged from the cutting planes **331.** In the figure, there are four inclined walls **333'** forming a square pyramid. Alternatively, while the positioning member **333** is structured by a cone that also integrally bulges from the cutting planes **331,** an oblate cone could be especially defined on the cutting planes **331** as preferably shown in Fig. **6****.** Accordingly, however the positioning member **333** is designed outward protrudent from the cutting planes **331,** a precise positioning effect on an object **4** in time of drilling is provided. Continuingly, the sub cutting edges **3321** preferably scrapes the object **4** in time of drilling. Moreover, while the threaded units **34** around the shank portion **31** extend to the sub cutting edges **3321** and connect to an end **3322** of one of the sub cutting edges **3321,** the first guiding channel **341** is formed as an intercommunicated channel amid the threaded units **34.**

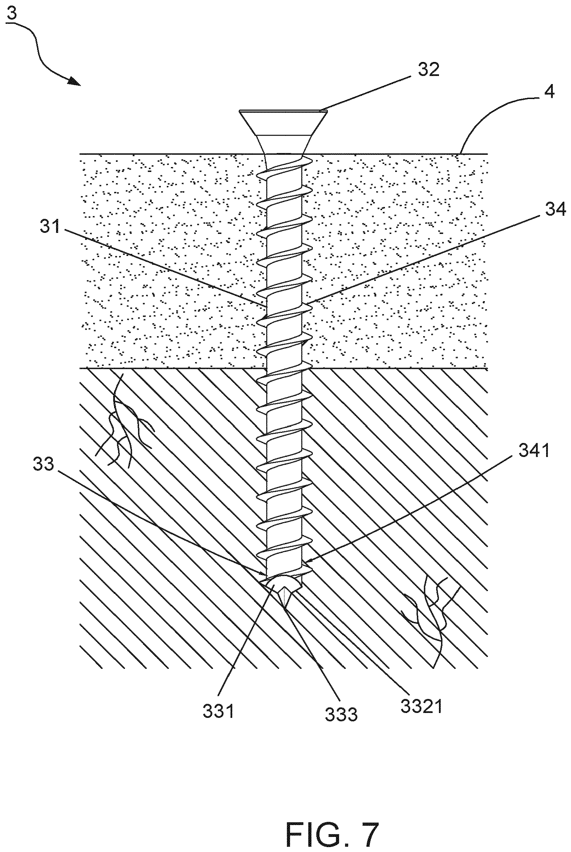

Referring to Fig. **7****,** in operation, the positioning member **333** props the screwing object **4** (plywood is adopted in the figure) for the screw **3** to achieve a stable positioning effect. Thereby, the head **32** is imparted by a screwing torque for allowing the drilling portion **33** to enter the object **4** by means of the sub cutting edges **3321** scraping the object **4.** Namely, when the positioning member **333** is served as a pivot of the screw **3,** the sub cutting edges 3321 are able to steadily scrape and enter the object **4.** Moreover, since the threaded units **34** extend and connect to the end **3322** of one of the sub cutting edge **3321,** the cutting planes **331** thrust the cutting debris generated in time of drilling, so that the cutting debris further travels into the first guiding channel **341** amid the threaded units **34** that are connected to the end **3322** of one of the sub cutting edges **3321.** Accordingly, the cutting debris is promptly removed, and there is no redundant cutting debris obstructing and compressing the vacancy between the screw **3** and the object **4,** which promotes the screwing speed but decreases the screwing torque. Thus, however the screw **3** is disposed upright or tilting, it could be evenly embedded in the object **4** for a further combination.

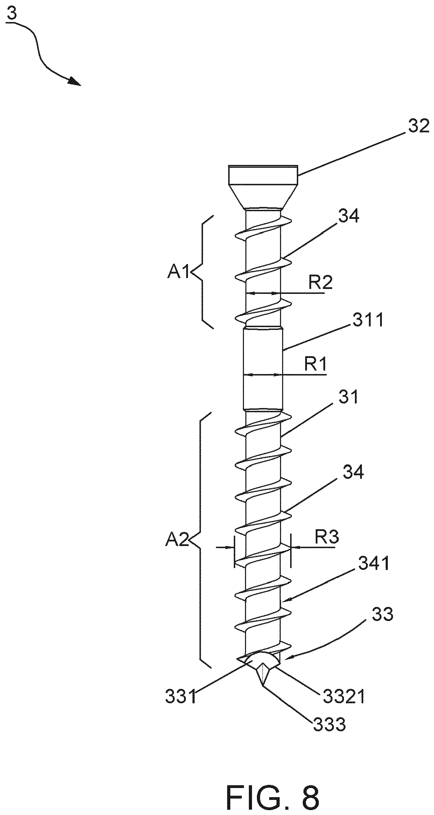

Referring to Fig. **8****,** a third preferred embodiment is shown. In order to clearly show the features of the screw **3,** the screw **3** in these figures and in the following embodiments are shown by another sides different from those of afore embodiments. Wherein, the screw **3** similarly comprises the shank **31,** the head **32,** the drilling portion **33,** and the threaded units **34.** Differently, a blank area 311 defined on the shank **31** divides the threaded units **34** into a first section **A1** and a second section **A2.** A first diameter **R1** of the blank area **311** is larger than a second diameter **R2** of the shank **31** but smaller than a third diameter **R3** of the threaded units **34.** Further, the second section **A2** of the threaded units **34** is spread to the sub cutting edges for connecting to one end **3322** of the sub cutting edges **3321.**

In operation, the positioning member **333** helps the screw **3** stably situates on the object **4** (not shown), and a screwing torque is imparted on the head **32** for bringing the drilling portion **33** to go through the object **4.** Herein, when the sub cutting edges **3321** contact the object **4,** the second section **A2** gradually gets in the object **4.** Thereby, cutting debris generated in time of drilling arrive at the second section **A2** along the cutting planes **331.** After that, the cutting debris are expelled rapidly through the first guiding channel **341** amid the threaded units **34,** the blank area **311,** and the first section **A1.** Obviously, no redundant cutting debris will accumulate and press the vacancy between the screw **3** and the object **4.** Moreover, the screw **3** could firmly stay in the object **4** since the first diameter **R1** of the blank area **311** is larger than the second diameter **R2** of the shank **31.** Preferably, the fastened screw **3** also promotes a subsequent combination.

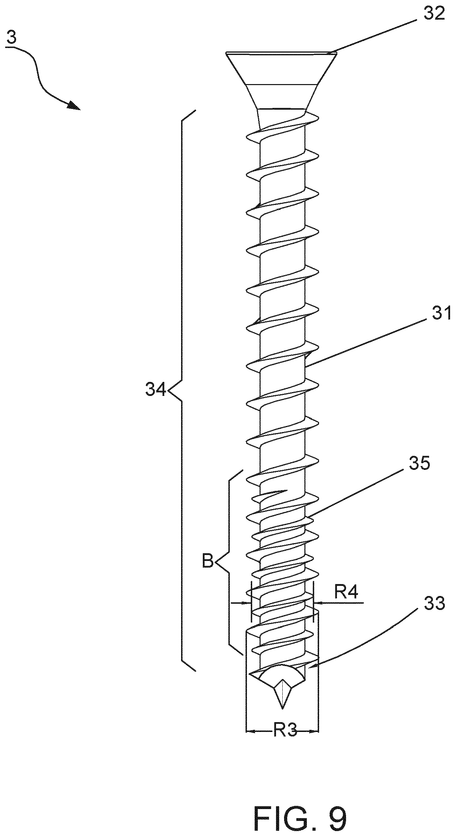

Referring to Fig. 9, a fourth preferred embodiment is shown. The screw **3** similarly comprises the shank **31,** the head **32,** the drilling portion **33,** and the threaded units **34** as those in the first and the second embodiments. Differently, a third section **B** is defined on the shank **31** and includes a plurality of auxiliary threaded units **35.** The auxiliary threaded units **35** are disposed between the threaded units **34.** A fourth diameter **R4** of the auxiliary threaded units **35** is smaller than the third diameter **R3** of the threaded units **34.** Whereby, the threaded units **34** and the auxiliary threaded units **35** contribute to a high-low threaded section on the shank. Accordingly, the screw **3** is able to sever the cutting fibers and expel the cutting debris faster and more efficient. Obviously, the screwing resistance is decreased since the vacancy between the object and the screw **3** is clear and not obstructed. Thus, the screw **3** provides a smooth screwing effect and a stable combination after fastened.

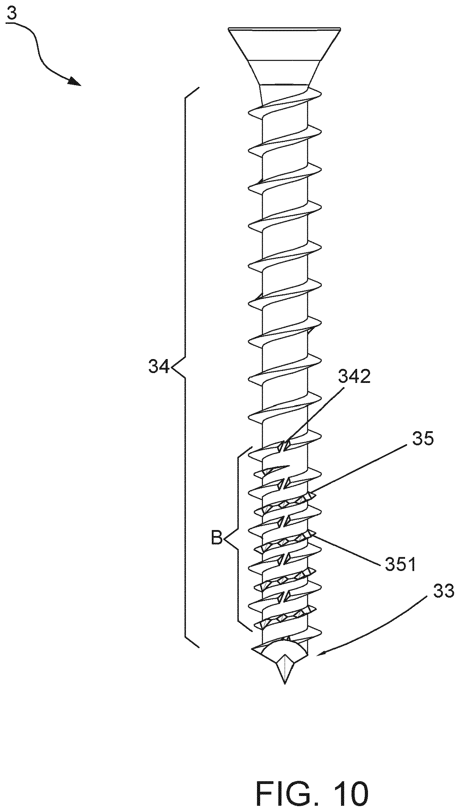

Referring to Fig. **10****,** a fifth preferred embodiment is shown similar to that of fourth preferred embodiment. Differently, a plurality of indented threads **351** are formed on the auxiliary threaded units **35.** Moreover, a plurality of second guiding channels **342** are partially defined on a part of the threaded units **34.** Wherein, a drilling effect and a concurrent severing function could be brought about by the second guiding channels **342** and the indented threads **351,** which enhances the drilling effect of the drilling portion **33** and promotes the cutting efficiency as well as the fastening performance. Favorably, the cutting debris is still timely expelled, which allows the friction and the torque in time of drilling to be largely reduced. Thus, the screw **3** is preferably embedded in the object **4,** and a firm and stationary fastening performance is achieved.

To sum up, the present invention in particularly utilizes the positioning member formed on the cutting planes of the drilling portion to render a stable positioning effect. Namely, dual sub cutting edges are provided by the positioning member dividing the cutting edge of the drilling portion. Thereby, the positioning member properly positions the screw for proceeding to subsequent drilling, and the sub cutting edges as well as the cutting planes help guide the cutting debris generated in time of screwing for a speedy expelling via the cutting planes and the guiding channels amid the threaded units. Accordingly, no redundant cutting debris would pile the vacancy between the screw and the object, so the drilling torque could be decreased, but the drilling speed could be enhanced. Thus, the screw of the present invention could be firmly and smoothly embedded in the object for a further combination.

While we have shown and described the embodiment in accordance with the present invention, it should be clear to those skilled in the art that further embodiments may be made without departing from the scope of the present claims.

## Claims

1. A screw (3) capable of rapidly drilling and cutting comprising a shank (31), a head (32) disposed at one end of said shank (31), a drilling portion (33) disposed at the other end of said shank (31), and a plurality of threaded units (34) spirally disposed around said shank (31); two inclined cutting planes (331) being formed on said drilling portion (33) and said two inclined cutting planes (331) being connected at a cutting edge (332);
wherein a tapered positioning member (333) extends outward from a convergence of said cutting planes (331) for dividing said cutting edge (332) into dual sub cutting edges (3321); and said threaded units (34) on said shank (31) are spread to said sub cutting edges (3321) for connecting to one end (3322) of said sub cutting edges (3321); wherein each sub cutting edge (3321) is disposed by an inclined angle and is inclined to said shank (31) by said inclined angle; a first included angle (***θ***1) formed by said sub cutting edges (3321) being less than 180 degrees; said first included angle (***θ***1) of said sub cutting edges (3321) being different from a second included angle (***θ***2) of a taper of said tapered positioning member (333).

2. The screw (3) as claimed in claim 1, wherein, a blank area (311) defined on said shank (31) divides said threaded units (34) into a first section (A1) and a second section (A2); a first diameter (R1) of said blank (311) area is larger than a second diameter (R2) of said shank (31) but smaller than a third diameter (R3) of said threaded units (34).

3. The screw (3) as claimed in claim 1, wherein, said second included angle (***θ***2) of the taper of said tapered positioning member (333) is smaller than said first included angle (***θ***1) of said sub cutting edges (3321).

4. The screw (3) as claimed in claim 2, wherein, said second included angle (***θ***2) of the taper of said tapered positioning member (333) is smaller than said first included angle (***θ***1) of said sub cutting edges (3321).

5. The screw (3) as claimed in claim 1, wherein a third section (B) is defined on said shank (31) and includes a plurality of auxiliary threaded units (35); said auxiliary threaded units (35) are disposed between said threaded units (34); a fourth diameter (R4) of said auxiliary threaded units (35) is smaller than a third diameter (R3) of said threaded units (34).

6. The screw (3) as claimed in claim 5, wherein, a plurality of indented threads (351) are formed on said auxiliary threaded units (35); a plurality of second guiding channels (342) are partially defined on a part of said threaded units (34).

7. The screw (3) as claimed in claim 1, wherein, said positioning member (333) is formed by a plurality of inclined walls (333') for structuring a pyramid.

8. The screw (3) as claimed in claim 1, wherein, said positioning member (333) is structured into a cone.

## Patentansprüche

1. - Schraube (3) zum schnellen Bohren und Schneiden mit einem Schaft (31), einem Kopf (32) an einem Ende des Schaftes (31), einem Bohrteil (33) an dem anderen Ende des Schaftes (31) und einer Vielzahl von Gewindeeinheiten (34), die in einer Spirale um den Schaft (31) angeordnet sind; zwei geneigte Schneideebenen (331) sind auf dem Bohrteil (33) gebildet und die beiden geneigten Schneideebenen (331) sind an einer Schneidekante (332) verbunden;
wobei ein kegeliges Platzierungselement (333) sich von einer Konvergenz besagter Schneideebenen (331) nach außen erstreckt, um besagte Schneidekante (332) in duale Unter-Schneidekanten (3321) aufzuteilen; und besagte Gewindeeinheiten (34) auf dem Schaft (31) werden zu den Unter-Schneidekanten (3321) hin ausgebreitet, zwecks Verbindung mit einem Ende (3322) der Unter-Schneidekanten (3321);
wobei jede Unter-Schneidekante (3321) schräg angeordnet ist und schräg zu besagtem Schaft (31) um die besagte Schräge; ein erster eingeschlossener Winkel (*θ*1), der durch die Unter-Schneidekanten (3321) gebildet wird, beträgt weniger als 180 Grad; der erste eingeschlossene Winkel (*θ*1) der Unter-Schneidekanten (3321) ist verschieden von einem zweiten eingeschlossenen Winkel (*θ*2) von einer Konizität des kegeligen Platzierungselements (333).

2. - Schraube (3) nach Anspruch 1, wobei eine leere Fläche (311) auf dem Schaft (31) definiert ist, die die Gewindeeinheiten (34) in einen ersten Abschnitt (A1) und einen zweiten Abschnitt (A2) teilt; ein erster Durchmesser (R1) der leeren Fläche (311) ist größer als ein zweiter Durchmesser (R2) des Schaftes (31), aber kleiner als ein dritter Durchmesser (R3) der Gewindeeinheiten (34).

3. - Schraube (3) nach Anspruch 1, wobei der zweite eingeschlossene Winkel (*θ*2) der Konizität des kegeligen Platzierungselements (333) kleiner als besagter erster eingeschlossener Winkel (*θ*1) der Unter-Schneidekanten (3321) ist.

4. - Schraube (3) nach Anspruch 2, wobei der zweite eingeschlossene Winkel (*θ*2) der Konizität des kegeligen Platzierungselements (333) kleiner ist als der erste eingeschlossene Winkel (*θ*1) der Unter-Schneidekanten (3321).

5. - Schraube (3) nach Anspruch 1, wobei ein dritter Abschnitt (B) auf dem Schaft (31) definiert ist und eine Vielzahl von Hilfs-Gewindeeinheiten (35) umfasst; besagte Hilfs-Gewindeeinheiten (35) sind zwischen den Gewindeeinheiten (34) angeordnet; ein vierter Durchmesser (R4) der Hilfs-Gewindeeinheiten (35) ist kleiner als ein dritter Durchmesser (R3) der Gewindeeinheiten (34).

6. - Schraube (3) nach Anspruch 5, wobei eine Vielzahl von eingerückten Gewinden (351) auf den Hilfs-Gewindeeinheiten (35) gebildet sind; eine Vielzahl von zweiten Führungskanälen (342) sind teilweise auf einem Teil der Gewindeeinheiten (34) definiert.

7. - Schraube (3) nach Anspruch 1, wobei das Platzierungselement (333) von einer Vielzahl von geneigten Wänden (333') gebildet wird, um eine Pyramide zu bilden.

8. - Schraube (3) nach Anspruch 1, wobei das Platzierungselement (333) einen Konus bildet.

## Revendications

1. - Vis (3) capable de percer et couper rapidement, comprenant une tige (31), une tête (32) disposée à une extrémité de ladite tige (31), une partie de perçage (33) disposée à l'autre extrémité de ladite tige (31), et une pluralité d'unités filetées (34) disposées en spirale autour de ladite tige (31) ; deux plans de coupe inclinés (331) étant formés sur ladite partie de perçage (33) et lesdits deux plans de coupe inclinés (331) étant reliés au niveau d'une arête de coupe (332) ;
un élément de positionnement effilé (333) s'étendant vers l'extérieur à partir d'une convergence desdits plans de coupe (331) pour diviser ladite arête de coupe (332) en deux arêtes de coupe secondaires (3321) ; et lesdites unités filetées (34) sur ladite tige (31) s'étendant vers lesdites arêtes de coupe secondaires (3321) pour se relier à une extrémité (3322) desdits arêtes de coupe secondaires (3321) ;
chaque arête de coupe secondaire (3321) étant disposée à un angle incliné et étant inclinée vers ladite tige (31) dudit angle incliné ; un premier angle inclus (θ1) formé par lesdites arêtes de coupe secondaires (3321) étant de moins de 180 degrés ; ledit premier angle inclus (θ1) desdites arêtes de coupe secondaires (3321) étant différent d'un second angle inclus (θ2) d'un effilement dudit élément de positionnement effilé (333).

2. - Vis (3) selon la revendication 1, dans laquelle une zone vierge (311) définie sur ladite tige (31) divise lesdites unités filetées (34) en une première section (A1) et une deuxième section (A2) ; un premier diamètre (R1) de ladite zone vierge (311) est plus grand qu'un deuxième diamètre (R2) de ladite tige (31), mais plus petit qu'un troisième diamètre (R3) desdites unités filetées (34).

3. - Vis (3) selon la revendication 1, dans laquelle ledit second angle inclus (θ2) de l'effilement dudit élément de positionnement effilé (333) est plus petit que ledit premier angle inclus (θ1) desdites arêtes de coupe secondaires (3321).

4. - Vis (3) selon la revendication 2, dans laquelle ledit second angle inclus (θ2) de l'effilement dudit élément de positionnement effilé (333) est plus petit que ledit premier angle inclus (θ1) desdites arêtes de coupe secondaires (3321).

5. - Vis (3) selon la revendication 1, dans laquelle une troisième section (B) est définie sur ladite tige (31) et comprend une pluralité d'unités filetées auxiliaires (35) ; lesdites unités filetées auxiliaires (35) sont disposées entre lesdites unités filetées (34) ; un quatrième diamètre (R4) desdites unités filetées auxiliaires (35) est plus petit qu'un troisième diamètre (R3) desdites unités filetées (34).

6. - Vis (3) selon la revendication 5, dans laquelle une pluralité de filetages dentelés (351) sont formés sur lesdites unités filetées auxiliaires (35) ; une pluralité de seconds canaux de guidage (342) sont partiellement définis sur une partie desdites unités filetées (34).

7. - Vis (3) selon la revendication 1, dans laquelle ledit élément de positionnement (333) est formé par une pluralité de parois inclinées (333') pour structurer une pyramide.

8. - Vis (3) selon la revendication 1, dans laquelle ledit élément de positionnement (333) est structuré en un cône.
